# EUROPÄISCHE PATENTSCHRIFT

(11) **EP 3 768 492 B1**
(45) Veröffentlichungstag und Bekanntmachung des Hinweises auf die Patenterteilung: **31.08.2022**
(21) Anmeldenummer: 19711552.0
(22) Anmeldetag: 12.03.2019
(51) Int. Cl.: B29C 49/50, B29C 49/18, B29C 49/04, B29C 49/30

(54) **VERFAHREN UND WERKZEUG ZUR HERSTELLUNG EINES KUNSTSTOFFBEHÄLTERS, INSBESONDERE EINES KRAFTSTOFFBEHÄLTERS, DURCH INNENDRUCKFORMEN**
METHOD AND TOOL FOR PRODUCING A PLASTIC CONTAINER, PARTICULARLY A FUEL CONTAINER, BY INTERNAL PRESSURE FORMING
PROCÉDÉ ET OUTIL POUR FABRIQUER PAR HYDROFORMAGE UN RÉCIPIENT EN MATIÈRE PLASTIQUE, EN PARTICULIER UN RÉSERVOIR DE CARBURANT

(30) Priorität: 19.03.2018 DE 102018204145
(43) Veröffentlichungstag der Anmeldung: 27.01.2021
(73) Patentinhaber: VOLKSWAGEN AKTIENGESELLSCHAFT, 38440 Wolfsburg (DE)
(72) Erfinder: BERLIN, Ralf, 39638 OT Wiepke / Gardelegen (DE); MIENTKEWITZ, Claudia, 30952 Ronnenberg (DE)
(86) Internationale Anmeldenummer: PCT/EP2019/056190
(87) Internationale Veröffentlichungsnummer: WO 2019/179830

(56) Entgegenhaltungen:
- EP-A1- 1 216 812
- DE-A1-102017 202 839

## Beschreibung

Die Erfindung betrifft ein Verfahren und ein Werkzeug zur Herstellung eines Kunststoffbehälters, insbesondere eines Kraftstoffbehälters, durch Innendruckformen und insbesondere durch Blasformen.

Beim Blasformen wird ein aufgeheizter und dadurch fließzäher Vorformling aus thermoplastischem Kunststoff innerhalb eines formgebenden Blaswerkzeugs mit Gas, z. B. mit Druckluft, aufgeblasen und legt sich dabei an eine formgebende Werkzeugwandung bzw. an die Innenwandung einer Werkzeugkavität an. Nach dem Aufblasen kühlt der durch das Aufblasen erzeugte Hohlkörper im Werkzeug ab, bis er genügend Formsteifigkeit besitzt und entformt werden kann. In einer gängigen Verfahrensvariante wird ein schlauchartiger Vorformling verwendet, der unmittelbar zuvor durch Extrusion erzeugt werden kann (sogenanntes Extrusionsblasformen).

Für Kraftfahrzeuge verwendete Kunststoffbehälter, wie insbesondere Kraftstoffbehälter (Kraftstofftanks), können durch Blasformen hergestellt werden. Mitunter müssen im Inneren eines solchen Kunststoffbehälters diverse Einbauteile angeordnet werden, wie bspw. Füllstandsgeber, Be- und Entlüftungselemente, Pumpen, Filter, Schwappschutzwände, Ventile, Befestigungselemente und Ähnliches. Derzeitige Bemühungen gehen dahin, möglichst viele oder alle Einbauteile bereits während der Herstellung des Kunststoffbehälters in diesen einzubringen, was die Zugänglichkeit zum Behälterinneren erfordert.

Möglichkeiten hierzu sind in den Patentschriften DE 100 64 801 A1, DE 10 2009 030 492 A1 und DE 10 2012 001 928 A1 beschrieben.

Die den nächstliegenden Stand der Technik bildendenden Patentschriften
DE 10 2013 203 085 A1 und EP 2 769 825 A1 beschreiben ein Blasformverfahren (und eine Vorrichtung) zur Herstellung eines Hohlkörpers, insbesondere eines Kraftstoffbehälters, bei dem ein schlauchartiger Vorformling zwischen zwei Teilen einer Blasform angeordnet wird, die Blasform nicht vollständig geschlossen wird, wobei der Vorformling im Bereich seiner Enden gasdicht verschlossen wird, und der Innenbereich des Vorformlings mit einem gasförmigen Druckmedium beaufschlagt wird, wodurch der Vorformling gegen Innenwandungen der Blasformteile gedrückt und der Hohlkörper vorgeformt wird. Um eine einfache Art der Auftrennung des Vorformlings in zwei Hälften zu ermöglichen ist vorgesehen, dass Partien des Vorformlings mittels an den Blasformteilen angeordneten Klemmvorrichtungen erfasst werden und der Vorformling jeweils zwischen den Klemmvorrichtungen in zwei Halbteile aufgerissen wird. Die Klemmvorrichtungen weisen jeweils ein in Öffnungs- und Schließrichtung der Blasformteile verschiebbares Klemmorgan und eine diesem stirnseitig gegenüberliegend angeordnete Anschlagkante auf, wobei eine Nut zwischen dem Klemmorgan und der Anschlagkante gebildet ist, in die Material des Vorformlings wulstartig hineingedrückt wird, und das Klemmorgan zum Einklemmen des Materials des Vorformlings oder die Anschlagkante verschoben wird.

Die deutsche Patentanmeldung 10 2017 202 839.4 beschreibt ein Verfahren und ein Werkzeug zur Herstellung eines Kunststoffbehälters durch Innendruckformen, insbesondere Blasformen, eines Vorformlings, der dabei aus der Werkzeugkavität herausgedrückt und außerhalb der Werkzeugkavität mittels Greifeinrichtungen gegriffen wird. Durch seitliches Verschieben der Greifeinrichtungen wird der gegriffene Abschnitt an einer außerhalb der Werkzeugkavität angeordneten Abrisskante abgerissen und der geformte Behälter dabei in zwei Behälterhälften geteilt. Die Patentanmeldung EP1216812 offenbart ein Verfahren zur Herstellung eines Kunststoffbehalters durch Innendruckformen, umfassend die Schritte: - Anordnen eines schlauchartigen Vorformlings zwischen den Werkzeugteilen eines mit einer Werkzeugkavitat ausgebildeten Formwerkzeugs ; - Schließen des Formwerkzeugs und Formen oder Vorformen eines Behälters aus dem Vorformling durch Innendruck, wobei ein umlaufender Abschnitt des Vorformlings durch einen Werkzeugspalt in eine die Werkzeugkavität umgebende Kammer gedrückt und in dieser Kammer gegen Krallen mit feststehenden inneren Haltekrallen gepresst wird.

Der Erfindung liegt die Aufgabe zugrunde, ein weiteres Verfahren und eine Vorrichtung zur Herstellung eines Kunststoffbehälters durch Innendruckformen eines schlauchartigen Vorformlings anzugeben, die wenigstens einen mit dem Stand der Technik einhergehenden Nachteil nicht oder zumindest nur in einem verminderten Umfang aufweisen.

Die Aufgabe wird gelöst durch das erfindungsgemäße Verfahren mit den Merkmalen des

Patentanspruchs 1 und durch das erfindungsgemäße Formwerkzeug (Vorrichtung), insbesondere ist dies ein Blasformwerkzeug, mit den Merkmalen des nebengeordneten

Patentanspruchs. Bevorzugte Weiterbildungen der Erfindung ergeben sich analog für beide Erfindungsgegenstände aus den abhängigen Patentansprüchen, der nachfolgenden Beschreibung und der Zeichnung. Vorrichtungs- bzw. Werkzeugmerkmale können also mit entsprechenden Verfahrensmerkmalen einhergehen und umgekehrt.

Das erfindungsgemäße Verfahren weist zumindest folgende, in dieser Reihenfolge auszuführende Schritte auf:
- Anordnen eines schlauchartigen Vorformlings zwischen den Werkzeugteilen eines mit einer Werkzeugkavität ausgebildeten (geöffneten) Formwerkzeugs;
- Schließen des Formwerkzeugs (durch Zusammenfahren der Werkzeugteile in einer Schließrichtung) und Formen oder zumindest Vorformen eines Behälters aus dem Vorformling durch Innendruck, d. h. durch Erzeugen eines Innendrucks im Innenbereich des Vorformlings mit einem gasförmigen Druckmedium, wobei ein umlaufender Abschnitt des Vorformlings durch einen (zwischen den Werkzeugteilen vorhandenen bzw. noch vorhandenen) Werkzeugspalt hindurch in eine die Werkzeugkavität umgebende Kammer gedrückt und in dieser Kammer gegen Krallenpaare mit feststehenden inneren Haltekrallen und bewegbaren äußeren Abreißkrallen gepresst wird;
- seitliches Verschieben der äußeren Abreißkrallen, wodurch der umlaufende, sich außerhalb der Werkzeugkavität befindende Abschnitt zwischen den bewegten, insbesondere nach außen bewegten, äußeren Abreißkrallen und den feststehenden inneren Haltekrallen aufgerissen und so der Behälter in zwei Behälterhälften geteilt wird.

Das seitliche Verschieben der Abreißkrallen erfolgt bei geschlossenem Formwerkzeug. D. h., zum Trennen des geformten oder vorgeformten Behälters in zwei Behälterhälften muss das Formwerkzeug nicht geöffnet werden. Unter seitlichem Verschieben wird insbesondere verstanden, dass die Abreißkrallen quer zur Schließrichtung bzw. Schließachse des Formwerkzeugs bzw. der Werkzeugteile bewegt werden. Quer heißt hierbei, dass die Bewegungsachsen der Abreißkrallen zur Schließachse bevorzugt einen Winkel zwischen 45° und 90° und besonders bevorzugt einen Winkel zwischen 60° und 90° einnehmen. Die Abreißkrallen werden insbesondere im Wesentlichen senkrecht (90°) zur Schließrichtung bewegt. Die Abreißkrallen werden dabei jeweils nach außen (seitlich nach außen), d. h. von der Werkzeugkavität wegbewegt.

Das erfindungsgemäße Verfahren kann ferner im Weiteren nicht näher erläuterte Zwischenschritte, Teilschritte, vorbereitende Schritte und/oder nachbereitende Schritte aufweisen. Bevorzugt wird das erfindungsgemäße Verfahren mithilfe eines erfindungsgemäßen Form- bzw. Blasformwerkzeugs ausgeführt und kann daher den vorausgehenden Schritt aufweisen:
- Bereitstellen eines erfindungsgemäßen Form- bzw. Blasformwerkzeugs.

Das verwendete Formwerkzeug umfasst bevorzugt zwei mit Kavitätsabschnitten ausgebildete Werkzeugteile (Werkzeughälften bzw. -seiten). Bevorzugt sind an jedem der beiden Werkzeugteile um die Werkzeugkavität herum Krallenpaare mit inneren (d. h. der Werkzeugkavität zugewandten), feststehenden Haltekrallen und äußeren (d. h. von der Werkzeugkavität abgewandten), bewegbaren Abreißkrallen angeordnet. Eine Kralle ist ein vorstehendes, d. h. in die Kammer hineinragendes Element, das z. B. harkenartig, klauenartig, klingenartig oder dergleichen ausgebildet ist. Der Vorformling wird im betreffenden Abschnitt durch den Innendruck auf die Krallen gepresst, wobei sich ein Formschluss ergibt (insbesondere ohne damit einhergehende Perforation), bspw. indem das Material des Vorformlings wulstartig über die Krallen gedrückt wird, und hierüber auf den betreffenden Abschnitt Reißkräfte aufgebracht werden können. Der Bereich, der hierbei für ein zuverlässiges Zerreißen benötigt wird, kann sehr klein gehalten werden. Außerdem sind keine Greif- oder Klemmeinrichtungen erforderlich.

Bevorzugt wird das Formwerkzeug im Bereich zwischen den inneren Haltekrallen und den äußeren Abreißkrallen mittels Temperierelementen (lokal) gekühlt oder beheizt. Dadurch können die Materialeigenschaften des Vorformlings durch gezieltes Abkühlen oder Erwärmen im betreffenden Bereich so beeinflusst werden, dass ein Zerreißen begünstigt wird (z. B. durch Sprödbruch oder Schmelztrennung).

Um im schlauchartigen Vorformling einen für die Behälterformung erforderlichen Innendruck erzeugen zu können, ist dieser an seinen axialen Enden gasdicht verschlossen. Der schlauchartige Vorformling kann beim Anordnen oder beim Schließen des Formwerkzeugs gasdicht verschlossen werden, bspw. durch Verschweißen. Ein verschlossener Vorformling kann aber auch als vorgefertigtes Ausgangsprodukt bereit gestellt werden. Im verschlossenen Vorformling kann bereits ein Gas (auch Luft) eingeschlossen sein, dass beim Schließen des Formwerkzeugs einen für die Behälterformung ausreichenden Innendruck erzeugt. Bevorzugt wird der Innendruck jedoch durch Einblasen eines gasförmigen Druckmediums in das Innere des verschlossenen Vorformlings erzeugt, insbesondere mithilfe wenigstens eines Blasdorns. Je nach weiterem Verfahrensablauf kann der Behälter hierbei im Wesentlichen fertig geformt oder nur vorgeformt werden.

Das erfindungsgemäße Verfahren kann ferner noch folgende, in dieser Reihenfolge auszuführende Schritte aufweisen:
- Öffnen des Formwerkzeugs durch Auseinanderfahren der Werkzeugteile, wobei jeweils eine Behälterhälfte in dem entsprechenden Werkzeugteil verbleibt;
- Befestigen wenigstens eines Einbauteils an wenigstens einer der Behälterhälften, insbesondere an der Innenseite;
- nochmaliges Schließen des Formwerkzeugs durch Zusammenfahren der Werkzeugteile, wobei die Behälterhälften bspw. an schmelzwarmen, nacherhitzten oder mit Klebstoff versehenen Rändern stoffschlüssig zu einem Behälter bzw. einer Behälterblase gefügt werden;
- Blasformen des gefügten Behälters durch Beaufschlagen des Innenbereiches des Behälters mit einem gasförmigen Druckmedium, wodurch der Behälter gegen die Innenwandung der Werkzeugkavität gedrückt und dabei fertig ausgeformt wird, d. h. hierdurch wird die Endform des herzustellenden Behälters geschaffen (das Fügen und Blasformen kann nacheinander, gleichzeitig oder bei entsprechender Abdichtung auch in umgekehrter Reihenfolge erfolgen);
- gegebenenfalls Beschneiden des Behälters, insbesondere mithilfe einer umlaufenden Schneideinrichtung des Formwerkzeugs;
- Öffnen des Formwerkzeugs und Entformen des fertigen, mit Einbauteilen versehenen Kunststoffbehälters.

Bevorzugt werden die Werkzeugteile beim nochmaligen Schließen des Formwerkzeugs zum Aus- bzw. Fertigformen des Behälters enger Zusammengefahren (zweite Schließstellung) als beim vorherigen Schließen zum Vorformen des Behälters (erste Schließstellung).

Das erfindungsgemäße Formwerkzeug, wobei es sich insbesondere um ein Blasformwerkzeug handelt, umfasst zumindest folgende Komponenten:
- zwei mit einer Werkzeugkavität ausgebildete und zueinander relativbewegliche Werkzeugteile;
- wenigstens eine die Werkzeugkavität umgebende Kammer (Außenkammer); und
- in der Kammer um die Werkzeugkavität herum angeordnete Krallenpaare, mit feststehenden inneren Haltekrallen und bewegbaren bzw. verfahrbaren, insbesondere seitlich bewegbaren, äußeren Abreißkrallen, die dazu vorgesehen sind, einen zuvor geformten Behälter in zwei Behälterhälften zu teilen, wie vorausgehend erläutert.

Ferner ist bevorzugt vorgesehen, dass zwischen den äußeren Abreißkrallen und den inneren Haltekrallen der Krallenpaare Temperierelemente angeordnet sind, zur (lokalen) Kühlung oder Beheizung, wie oben beschrieben.

Die äußeren Abreißkrallen können an Schiebern, insbesondere an seitlich verschiebbaren bzw. verfahrbaren Schieber, befestigt sein, die zugleich die die Werkzeugkavität umgebende Kammer seitlich (d. h. quer nach außen) begrenzen. Bevorzugt sind die Schieber an beiden Werkzeugteilen als sich gegenüberliegende Schieber bzw. Schieberpaare angeordnet. Das Verschieben der Schieber kann mittels geeigneter Stellantriebe, bspw. Hydraulikzylinder, oder aber auch mittels Keilschiebermechanismus bewerkstelligt werden.

Das erfindungsgemäße Formwerkzeug weist bevorzugt eine erste Schließstellung zum Vorformen des Behälters und eine zweite Schließstellung, in der die Werkzeugteile enger zusammengefahren sind, zum Ausformen des Behälters auf. Die erste Schließstellung und die zweite Schließstellung können durch einen unterschiedlichen (seitlichen) Verfahrweg der Schieber ermöglicht werden, insbesondere derart, dass die sich gegenüberliegenden Schieber eine innere Position (Anfangsposition) einnehmen können, die die erste Schließstellung zwischen den Werkzeugteilen ermöglicht, und wenigstens eine äußere, zueinander versetzte Position (Endposition), die die zweite Schließstellung zwischen den Werkzeugteilen ermöglicht.

Weitere Merkmale und Vorteile der Erfindung ergeben sich aus der nachfolgenden Beschreibung mit Bezug auf die Zeichnung. Unabhängig von bestimmten Merkmalskombinationen können die in den Figuren der Zeichnung gezeigten Merkmale und/oder die nachfolgend erläuterten Merkmale allgemeine Merkmale der Erfindung sein und die Erfindung entsprechend weiterbilden.

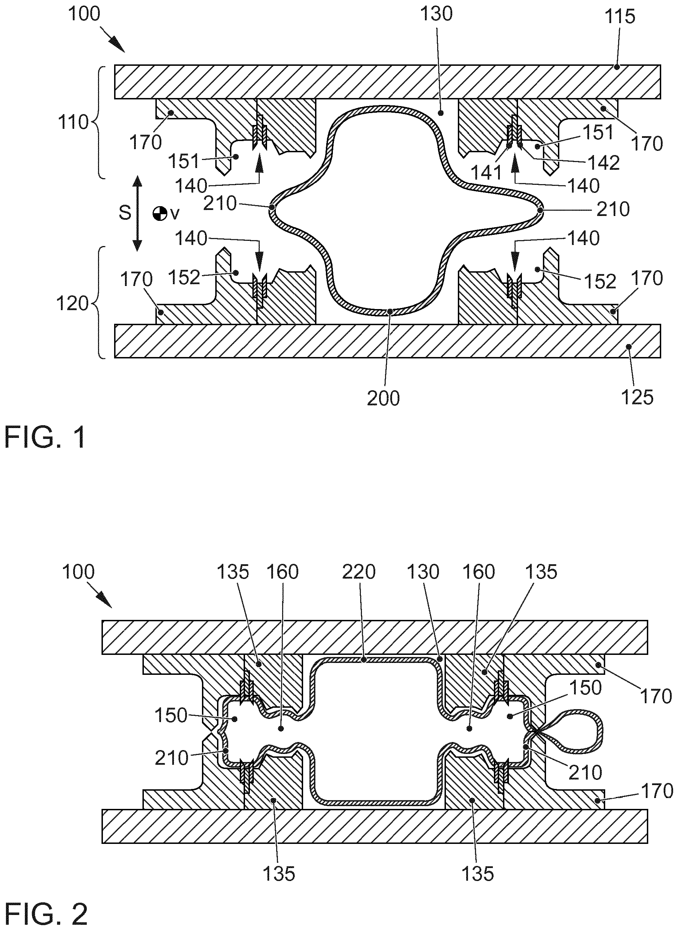

- Fig. 1 bis 6: veranschaulichen in schematischen Schnittdarstellungen die erfindungsgemäße Herstellung eines Kunststoffbehälters.

Das in den Figuren 1 bis 6 nur schematisch dargestellte Blasformwerkzeug 100 weist zwei zueinander relativbewegliche Werkzeugteile bzw. -hälften 110 und 120 auf, die mit einer formgebenden Werkzeugkavität 130 ausgebildet sind. Ferner weisen beide Werkzeugteile 110 und 120 um die Werkzeugkavität 130 herum angeordnete Schieber 170 auf, die seitlich, d. h. quer zur Schließrichtung S verschiebbar sind. Das Blasformwerkzeug 100 ist in einer nicht gezeigten Blasformmaschine eingebaut, insbesondere derart, dass die Werkzeugteile 110 und 120 vertikal ausgerichtet sind (siehe Bezugszeichen v), so dass ein aufzublasender schlauchartiger Vorformling 200 von oben eingeführt werden kann. Aufgrund der vertikalen Ausrichtung v können die Werkzeugteile 110 und 120 auch als Werkzeugseiten bezeichnet werden. Im Weiteren wird die Herstellung eines Kraftstoffbehälters 260, insbesondere eines Kraftstofftanks bzw. -behälters, mit Einbauteilen 250 beschrieben. Die einzelnen Schritte werden bevorzugt automatisiert und insbesondere vollautomatisiert ausgeführt.

Zu Beginn des Herstellvorgangs wird der vorzugsweise extrudierte schlauchartige Vorformling 200 an seinen axialen Enden gasdicht verschlossen und zwischen den geöffneten Werkzeugteilen 110 und 120 in der Werkzeugkavität 130 positioniert, wie in Fig. 1 gezeigt. Der schlauchartige Vorformling 200 ist bspw. aus HDPE (High-Density Polyethylen) gebildet und wird im erwärmten oder noch schmelzwarmen Zustand verarbeitet. Durch Vorblasen wird aus dem schlauchartigen Vorformling 200 ein Hohlkörper erzeugt, der beim Schließen des Blasformwerkzeugs 100 durch Zusammenfahren der Werkzeugteile 110 und 120 verformt wird, wobei ein umlaufender Abschnitt 210 des Vorformlings 200 durch einen Werkzeugspalt 160 zwischen den Werkzeugteilen 110 und 120 hindurch aus der Werkzeugkavität 130 herausgedrückt und in eine die Werkzeugkavität 130 ringsum umgebende Kammer bzw. umlaufende Außenkammer 150 hineingedrückt wird. Die Kammer 150 wird beim Zusammenfahren der Werkzeugteile 110 und 120 aus den Teilkammern 151 und 152 gebildet. Ein eventuell überstehender Außenrand des Vorformlings 200 kann dabei zwischen den Schiebern 170 eingeklemmt werden, wie in Fig. 2 gezeigt, und wird durch entsprechende Ausgestaltung der Schieber 170 abgequetscht.

Nachdem das Blasformwerkzeug 100 geschlossen ist und die Werkzeugteile 110 und 120 die in Fig. 2 gezeigte erste Schließstellung eingenommen haben, wird der Vorformling 200 bzw. der daraus gebildete Hohlkörper durch Beaufschlagen seines Innenbereiches mit einem gasförmigen Druckmedium, bspw. Druckluft, blasgeformt bzw. aufgeblasen, wodurch der Vorformling 200 näherungsweise gegen die Innenwandung der Werkzeugkavität 130 gedrückt und dabei ein Behälter 220 vorgeformt wird. Durch einen Werkzeugspalt 160 zwischen den Werkzeugsegmenten bzw. Wandkomponenten 135 hindurch wird dabei auch der in der Kammer 150 befindliche umlaufende Abschnitt 210 des Vorformlings 200 durch den Innendruck umgeformt und hierbei gegen Krallenpaare 140 mit inneren Haltekrallen 141 und äußeren Abreißkrallen 142 gepresst bzw. auf die Krallen 141 und 142 geblasen. Die Krallen 141 und 142 sind an beiden Werkzeugteilen 110 und 120 seitlich um die Werkzeugkavität 130 herum angeordnet, wobei die inneren (d. h. der Werkzeugkavität 130 zugewandten) Haltekrallen 141 feststehend und die äußeren (d. h. von der Werkzeugkavität 130 abgewandten) Abreißkrallen 142 bewegbar sind. Die Schieber 170 bilden eine nur in dieser ersten Werkzeugschließstellung wirksame äußere Werkzeugabdichtung (erste Dichtebene) und ermöglichen so einen Druckaufbau in der Kammer 150.

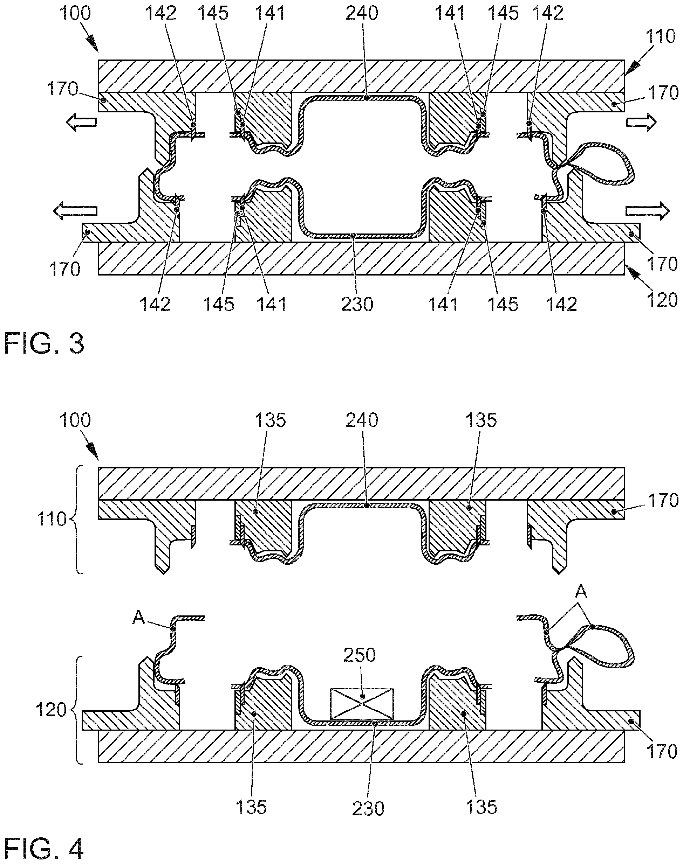

Bei geschlossenem Blasformwerkzeug 100 werden nun, insbesondere bei entlastetem Innendruck, die Schieber 170 ausgehend von ihrer in Fig. 2 gezeigten inneren Anfangsposition seitlich, d. h. quer zur Schließrichtung S der Werkzeugteile 110 und 120 (siehe Fig. 1), und nach außen, d. h. von der Werkzeugkavität 130 weggerichtet, verschoben, was in Fig. 3 durch die Pfeile verdeutlicht ist. Die Schieber 170 haben dabei einen unterschiedlichen Verfahrweg, wie aus Fig. 3 ersichtlich. An beiden Werkzeugteilen 110 und 120 wird hierbei der Abschnitt 210 zwischen den bewegten äußeren Abreißkrallen 142, die mit den Schiebern 170 verbunden sind, und den feststehenden inneren Haltekrallen 141, die mit den Werkzeugsegmenten 135 verbunden sind, aufgerissen, wodurch der vorgeformte Behälter 220 in zwei Behälterhälften 230 und 240 geteilt wird - ohne dass dabei das Formwerkzeug 100 geöffnet wird, d. h. also bei geschlossenem Formwerkzeug 100. Zwischen den feststehenden inneren Haltekrallen 141 und den bewegbaren äußeren Abreißkrallen 142 befinden sich Temperierelemente 145 zur lokalen Kühlung oder Erwärmung, um je nach dem durch gezieltes Verändern der Materialeigenschaften das Abreißen zu begünstigen.

Das Blasformwerkzeug 100 wird dann geöffnet, wobei die Behälterhälften 230 und 240 in den entsprechenden Werkzeugteilen 110 und 120 verbleiben, wie in Fig. 4 gezeigt. Im nun zugänglichen Behälterinneren werden die Einbauteile 250 positioniert und an wenigstens einer Innenseite fixiert. Ferner können die abgerissenen Abfallstücke A aus dem Blasformwerkzeug 100 entfernt werden.

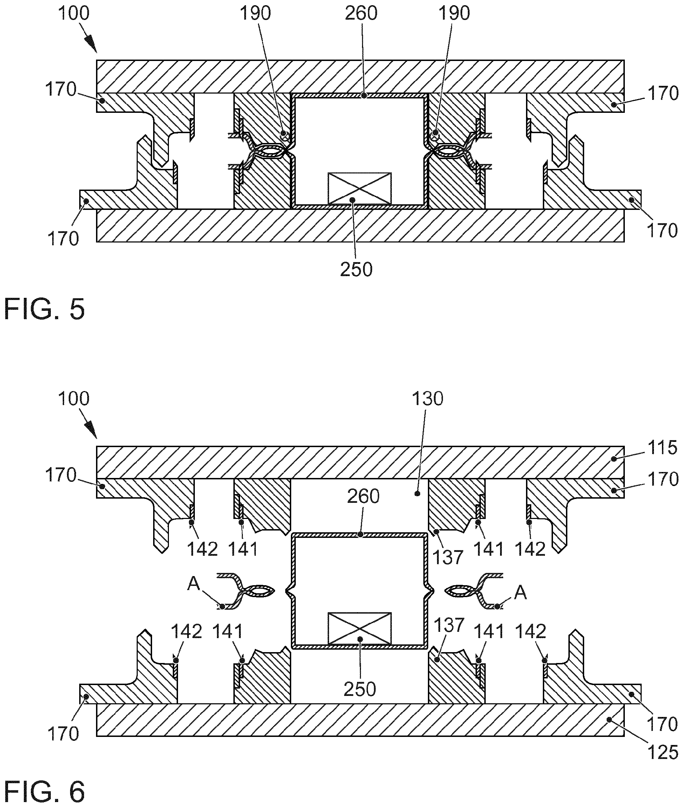

Das Blasformwerkzeug 100 wird jetzt nochmalig geschlossen, wobei die Werkzeugteile 110 und 120 eine zweite, engere Schließstellung einnehmen, wie in Fig. 5 gezeigt. Diese engere Werkzeugschließstellung wird durch die versetzt nach außen geschobenen Schieber 170 ermöglicht. Dadurch können die Werkzeugteile 110 und 120 weiter zusammenfahren und der in der ersten Schließstellung (siehe Fig. 2 und 3) noch vorhandene Werkzeugspalt 160 wird geschlossen. Die in der ersten Schließstellung noch beabstandeten Werkzeugsegmente 135 bilden nun eine nur in dieser zweiten Werkzeugschließstellung wirksame innere Werkzeugabdichtung (zweite Dichtebene).

Bei diesem nochmaligen Schließen des Blasformwerkzeugs 100 werden die Behälterhälften 230 und 240 miteinander gefügt. Hierzu kann das Blasformwerkzeug 100 eine Heizeinrichtung 190 aufweisen, mit der die zu fügenden Ränder der Behälterhälften 230 und 240 nacherhitzt werden können, um ein stoffschlüssiges und gasdichtes Fügen zu ermöglichen, wobei auch andere Erwärmungs- und/oder Verbindungsmöglichkeiten realisierbar sind. Die nun gasdichte Behälterblase wird durch Beaufschlagen ihres Innenbereiches mit einem gasförmigen Druckmedium, insbesondere Druckluft, weiter aufgeblasen und dabei formfolgend gegen die Innenwandung der Werkzeugkavität 130 gedrückt, wodurch der zweiteilige Behälter 260 fertig ausgeformt wird.

Der hergestellte Kunststoffbehälter 260 mit den integrierten Einbauteilen 250 kühlt im Blasformwerkzeug 100 ab, bis er genügend Formsteifigkeit besitzt und nach dem Öffnen des Blasformwerkzeugs 100 entformt werden kann, wie in Fig. 6 gezeigt. Beim vorausgehenden Werkzeugschließvorgang (siehe Fig. 5) kann der hergestellte Behälter 260 ferner mithilfe einer integrierten Schneid- bzw. Trimmeinrichtung 137 beschnitten werden. Zur Entformung des Behälters 260 und etwaiger Abfallstücke A kann das Blasformwerkzeug 100 nicht gezeigte Auswerfer aufweisen. Zur Herstellung eines weiteren Behälters 260 werden die Schieber 170 nun wieder in ihre innere Anfangsposition (siehe Fig. 1) verschoben.

Alternativ zu der vorausgehend erläuterten Vorgehensweise kann vorgesehen sein, dass ohne Vorformen bereits beim ersten Schließen des Formwerkzeugs 100 der Behälter 260 im Wesentlichen ausgeformt bzw. fertiggeformt wird, dann durch seitliches Verschieben der Abreißkrallen 142 getrennt, geöffnet, mit Einbauteilen 250 bestückt und beim zweiten Schließen des Formwerkzeugs (mit oder gegebenenfalls auch ohne Innendruck) gefügt wird.

### Bezugszeichenliste

- 100: Blasformwerkzeug
- 110: Werkzeugteil
- 115: Grundplatte
- 120: Werkzeugteil
- 125: Grundplatte
- 130: Werkzeugkavität
- 135: Werkzeugsegment
- 137: Schneideinrichtung
- 140: Krallenpaar(e)
- 141: Haltekralle
- 142: Abreißkralle
- 145: Temperierelement
- 150: Kammer
- 151: Teilkammer
- 152: Teilkammer
- 160: Werkzeugspalt
- 170: Schieber
- 190: Heizeinrichtung
- 200: Vorformling
- 210: Abschnitt
- 220: Behälter
- 230: Behälterhälfte
- 240: Behälterhälfte
- 250: Einbauteil(e)
- 260: Kunststoffbehälter
- A: Abfallstück
- S: Schließrichtung
- v: Vertikale

## Patentansprüche

1. Verfahren zur Herstellung eines Kunststoffbehälters (260) durch Innendruckformen, umfassend die Schritte:
- Anordnen eines schlauchartigen Vorformlings (200) zwischen den Werkzeugteilen (110, 120) eines mit einer Werkzeugkavität (130) ausgebildeten Formwerkzeugs (100);
- Schließen des Formwerkzeugs (100) und Formen oder Vorformen eines Behälters (220) aus dem Vorformling (200) durch Innendruck, wobei ein umlaufender Abschnitt (210) des Vorformlings (200) durch einen Werkzeugspalt (160) in eine die Werkzeugkavität (130) umgebende Kammer (150) gedrückt und in dieser Kammer (150) gegen Krallenpaare (140) mit feststehenden inneren Haltekrallen (141) und bewegbaren äußeren Abreißkrallen (142) gepresst wird;
- seitliches Verschieben der äußeren Abreißkrallen (142), wobei die äußeren Abreißkrallen (142) quer zur Schließrichtung bzw. Schließachse des Formwerkzeuges (100) bzw. der Werkzeugteile (110, 120) bewegt werden, wodurch der umlaufende Abschnitt (210) zwischen den äußeren Abreißkrallen (142) und den inneren Haltekrallen (141) aufgerissen und der Behälter (220) in zwei Behälterhälften (230, 240) geteilt wird.

2. Verfahren nach Anspruch 1,
**dadurch gekennzeichnet, dass**
das Formwerkzeug (100) zwischen den inneren Haltekrallen (141) und den äußeren Abreißkrallen (142) mittels Temperierelementen (145) gekühlt oder beheizt wird.

3. Verfahren nach Anspruch 1 oder 2, umfassend die weiteren Schritte:
- Öffnen des Formwerkzeugs (100), wobei jeweils eine Behälterhälfte (230, 240) in dem entsprechenden Werkzeugteil (110, 120) verbleibt;
- Befestigen wenigstens eines Einbauteils (250) an wenigstens einer der Behälterhälften (230, 240);
- Schließen des Formwerkzeugs (100), wobei die Behälterhälften (230, 240) gefügt werden und Blasformen des gefügten Behälters, der dabei fertig ausgeformt wird;
- Öffnen des Formwerkzeugs (100) und Entformen des fertigen Behälters (260).

4. Verfahren nach Anspruch 3,
**dadurch gekennzeichnet, dass**
die Werkzeugteile (110, 120) beim Schließen des Formwerkzeugs (100) zum Ausformen des Behälters (260) enger zusammengefahren werden als beim Schließen zum Vorformen des Behälters (220).

5. Formwerkzeug (100) zur Herstellung eines Kunststoffbehälters (260) durch Innendruckformen eines schlauchartigen Vorformlings (200), insbesondere durch Anwendung eines Verfahrens gemäß einem der vorausgehenden Ansprüche, umfassend:
- zwei mit einer Werkzeugkavität (130) ausgebildete und zueinander relativbewegliche Werkzeugteile (110, 120);
- wenigstens eine die Werkzeugkavität (130) umgebende Kammer (150); und
- in der Kammer (150) um die Werkzeugkavität (130) herum angeordnete
Krallenpaare (140), mit feststehenden inneren Haltekrallen (141) und seitlich, quer zur Schließrichtung bzw. Schließachse des Formwerkzeuges bzw. der Werkzeugteile, verschiebbaren äußeren Abreißkrallen (142).

6. Formwerkzeug (100) nach Anspruch 5,
**dadurch gekennzeichnet, dass**
an jedem der beiden Werkzeugteile (110, 120) Krallenpaare (140) mit feststehenden inneren Haltekrallen (141) und bewegbaren äußeren Abreißkrallen (142) angeordnet sind.

7. Formwerkzeug (100) nach Anspruch 5 oder 6,
**dadurch gekennzeichnet, dass**
zwischen den inneren Abreißkrallen (141) und den äußeren Abreißkrallen (142) Temperierelemente (145) angeordnet sind.

8. Formwerkzeug (100) nach einem der Ansprüche 5 bis 7,
**dadurch gekennzeichnet, dass**
die äußeren Abreißkrallen (142) an Schiebern (170) befestigt sind, die zugleich die Kammer (150) seitlich begrenzen.

9. Formwerkzeug (100) nach einem der Ansprüche 5 bis 8,
**dadurch gekennzeichnet, dass**
dieses eine erste Schließstellung und eine zweite Schließstellung aufweist.

10. Formwerkzeug (100) nach Anspruch 8 und 9,
**dadurch gekennzeichnet, dass**
die erste Schließstellung und die zweite Schließstellung durch einen unterschiedlichen Verfahrweg der Schieber (170) ermöglicht werden.

## Claims

1. Method for producing a plastic container (260) by internal pressure molding, comprising the steps of:
- arranging a tubular preform (200) between the tool parts (110, 120) of a molding tool (100) formed with a tool cavity (130);
- closing the molding tool (100), and molding or pre-molding a container (220) from the preform (200) by means of internal pressure, wherein a circumferential portion (210) of the preform (200) is pressed through a tool gap (160) into a chamber (150) surrounding the tool cavity (130) and, in this chamber (150), is pressed against claw pairs (140) with fixed inner retaining claws (141) and movable outer tear-off claws (142);
- moving the outer tear-off claws (142) laterally, wherein the outer tear-off claws (142) are moved transverse to the closing direction or closing axis of the molding tool (100) or of the tool parts (110, 120),
whereby the circumferential portion (210) between the outer tear-off claws (142) and the inner tear-off claws (141) is torn open and the container (220) is divided into two container halves (230, 240).

2. Method according to claim 1,
**characterized in that**
the molding tool (100) is cooled or heated between the inner retaining claws (141) and the outer tear-off claws (142), by means of temperature-control elements (145).

3. Method according to claim 1 or 2, comprising the further steps of:
- opening the molding tool (100), wherein a respective container half (230, 240) remains in the corresponding tool part (110, 120);
- attaching at least one assembly part (250) to at least one of the container halves (230, 240);
- closing the molding tool (100), wherein the container halves (230, 240) are joined, and blow molding the joined container, which is thereby given its final shape;
- opening the molding tool (100) and demolding the finished container (260).

4. Method according to claim 3,
**characterized in that**
the tool parts (110, 120) are moved closer together, upon closing the molding tool (100) to form the container (260), than upon closing to pre-mold the container (220).

5. Molding tool (100) for producing a plastic container (260) by means of internal pressure molding of a tubular preform (200), in particular by applying a method according to one of the preceding claims, comprising:
- two tool parts (110, 120) formed with a tool cavity (130) and movable relative to one another;
- at least one chamber (150) surrounding the tool cavity (130); and
- claw pairs (140) arranged in the chamber (150) around the tool cavity (130), with fixed inner retaining claws (141) and outer tear-off claws (142), said outer tear-off claws (142) being displaceable laterally, transverse to the closing direction or closing axis of the molding tool or the tool parts.

6. Molding tool (100) according to claim 5,
**characterized in that**
pairs of claws (140) with fixed inner retaining claws (141) and movable outer tear-off claws (142) are arranged on each of the two tool parts (110, 120).

7. Molding tool (100) according to claim 5 or 6,
**characterized in that**
temperature-control elements (145) are arranged between the inner tear-off claws (141) and the outer tear-off claws (142).

8. Molding tool (100) according to any one of claims 5 to 7,
**characterized in that**
the outer tear-off claws (142) are attached to sliders (170) which simultaneously laterally delimit the chamber (150).

9. Molding tool (100) according to any one of claims 5 to 8,
**characterized in that**
it has a first closing position and a second closing position.

10. Molding tool (100) according to claims 8 and 9,
**characterized in that**
the first closing position and the second closing position are enabled by a different travel path of the sliders (170).

## Revendications

1. Procédé de fabrication d'un récipient en plastique (260) par moulage par pression interne, comprenant les étapes :
- de disposition d'une préforme (200) de type tuyau entre les parties d'outil (110, 120) d'un outil de moulage (100) formé avec une cavité d'outil (130) ;
- de fermeture de l'outil de moulage (100) et de moulage ou de prémoulage d'un récipient (220) à partir de la préforme (200) par pression interne, une section périphérique (210) de la préforme (200) étant pressée à travers une fente d'outil (160) dans une chambre (150) entourant la cavité d'outil (130) et étant pressée dans cette chambre (150) contre des paires de griffes (140) comprenant des griffes de fixation (141) internes fixes et des griffes d'arrachage (142) externes mobiles ;
- de déplacement latéral des griffes d'arrachage (142) externes, les griffes d'arrachage (142) externes étant déplacées perpendiculairement au sens de fermeture ou à l'axe de fermeture de l'outil de moulage (100) ou des parties d'outils (110, 120),
de sorte que la section périphérique (210) soit déchirée entre les griffes d'arrachage (142) externes et les griffes de fixation (141) internes et que le récipient (220) soit divisé en deux moitiés de récipient (230, 240).

2. Procédé selon la revendication 1,
**caractérisé en ce que**
l'outil de moulage (100) est refroidi ou chauffé entre les griffes de fixation (141) internes et les griffes d'arrachage (142) externes au moyen d'éléments de thermorégulation (145).

3. Procédé selon la revendication 1 ou 2, comprenant les étapes supplémentaires :
- d'ouverture de l'outil de moulage (100), une moitié de récipient (230, 240) restant respectivement dans la partie d'outil (110, 120) correspondante ;
- de fixation d'au moins une pièce d'insert (250) à au moins une des moitiés de récipient (230, 240) ;
- de fermeture de l'outil de moulage (100), les moitiés de récipient (230, 240) étant assemblées, et de moulage par soufflage du récipient assemblé, dont la formation est ainsi finie ;
- d'ouverture de l'outil de moulage (100) et de démoulage du récipient fini (260).

4. Procédé selon la revendication 3,
**caractérisé en ce que**
les parties d'outil (110, 120) sont rapprochées plus étroitement lors de la fermeture de l'outil de moulage (100) pour le moulage du récipient (260) que lors de la fermeture pour le prémoulage du récipient (220).

5. Outil de moulage (100) pour la fabrication d'un récipient en plastique (260) par moulage par pression interne d'une préforme (200) de type tuyau, en particulier par l'utilisation d'un procédé selon l'une quelconque des revendications précédentes, comprenant :
- deux parties d'outil (110, 120) formées avec une cavité d'outil (130) et mobiles l'une par rapport à l'autre ;
- au moins une chambre (150) entourant la cavité d'outil (130) ; et
- des paires de griffes (140) disposées dans la chambre (150) autour de la cavité d'outil (130), comprenant des griffes de fixation (141) internes fixes et des griffes d'arrachage (142) externes pouvant être déplacées latéralement, perpendiculairement au sens de fermeture ou à l'axe de fermeture de l'outil de moulage ou des parties d'outil.

6. Outil de moulage (100) selon la revendication 5,
**caractérisé en ce que**
des paires de griffes (140) comprenant des griffes de fixation (141) internes fixes et des griffes d'arrachage (142) externes mobiles sont disposées sur chacune des parties d'outil (110, 120).

7. Outil de moulage (100) selon la revendication 5 ou 6,
**caractérisé en ce que**
des éléments de thermorégulation (145) sont disposés entre les griffes de fixation (141) internes et les griffes d'arrachage (142) externes.

8. Outil de moulage (100) selon l'une quelconque des revendications 5 à 7,
**caractérisé en ce que**
les griffes d'arrachage (142) externes sont fixées sur des glissières (170), qui limitent en même temps latéralement la chambre (150).

9. Outil de moulage (100) selon l'une quelconque des revendications 5 à 8,
**caractérisé en ce que**
celui-ci présente une première position de fermeture et une seconde position de fermeture.

10. Outil de moulage (100) selon la revendication 8 et 9,
**caractérisé en ce que**
la première position de fermeture et la seconde position de fermeture sont rendues possibles par un déplacement différent des glissières (170).
